# FASCICULE DE BREVET EUROPEEN

(11) **EP 1 862 719 B1**
(45) Date de publication et mention de la délivrance du brevet: **25.02.2009**
(21) Numéro de dépôt: 07356071.6
(22) Date de dépôt: 25.05.2007
(51) Int. Cl.: F16L 37/107, F16L 37/28

(54) **Elément de raccord à rainure de verrouillage et raccord incorporant un tel élément**
Verbindungselement mit Verriegelungsnut und ein solches Element integrierende Verbindung
Connection element with locking groove and joint including such an element

(30) Priorité: 29.05.2006 FR 0604763
(43) Date de publication de la demande: 05.12.2007
(73) Titulaire: STAUBLI FAVERGES, 74210 FAVERGES (FR)
(72) Inventeur: Tiberghien, Alain-Christophe, 74320 Sevrier (FR); Durieux, Christophe, 73200 Gilly sur Isere (FR); Marques Barroca, Serafim, 73460 Frontenex (FR)
(74) Mandataire: Myon, Gérard Jean-Pierre

(56) Documents cités:
- EP-A1- 1 164 327
- FR-A- 1 526 167
- US-A- 2 076 918
- US-A- 5 253 716

## Description

La présente invention a trait à un élément de raccord et à un raccord destiné à la jonction amovible de deux canalisations.

Il est connu de EP-A-1 164 327 de connecter deux éléments d'un raccord au moyen de rampes de verrouillage avec surcourse ménagées dans une bague d'un premier élément et destinées à recevoir des pions en saillie radiale du second élément. Les deux éléments du raccord comportent des clapets d'obturation associés à des ressorts, qui tendent à écarter les éléments l'un de l'autre. Le verrouillage est obtenu en exerçant un effort de rapprochement à l'encontre des ressorts des clapets jusqu'à atteindre une zone de surcourse dans laquelle les ressorts des clapets poussent les pions du second élément dans des encoches. Dans ce dispositif, le verrouillage des pions est assuré exclusivement par les ressorts des clapets. De ce fait, il existe un risque de déconnexion des éléments en cas de dépression dans les circuits de fluide raccordés associée à une rotation relative des éléments, par exemple sous l'effet de vibrations, ce qui tend à rapprocher les deux éléments et à entraîner les pions dans les zones de surcourse des rampes de verrouillage, dans le sens du déverrouillage.

Il est également connu de FR-A-1 580 284 de raccorder des éléments mâle et femelle en utilisant une bague fendue montée avec possibilité de rotation autour d'un corps de l'élément femelle. La bague fendue comporte deux séries de fentes juxtaposées, une première série de fentes étant destinée à recevoir des tenons en saillie radiale de l'élément mâle, alors que la deuxième série de fentes est destinée à recevoir des pions intérieurs d'une bague externe coiffant la bague fendue. Les deux séries de fentes sont agencées de telle façon que la bague fendue est entraînée en rotation autour du corps de l'élément femelle lors du rapprochement axial des éléments mâle et femelle. Grâce à la rotation de la bague fendue, on obtient un verrouillage simultané des tenons de l'élément mâle dans des encoches circonférentielles de la première série de fentes et des pions internes de la bague externe dans des encoches inclinées de la deuxième série de fentes. Dans ce dispositif, l'introduction des tenons de l'élément mâle dans la première série de fentes nécessite l'alignement de ces fentes avec des fentes axiales du corps de l'élément femelle. Or, la bague fendue étant montée libre en rotation autour du corps de l'élément femelle, ces fentes sont susceptibles d'être décalées les unes par rapport aux autres. Leur alignement peut être obtenu en exerçant un effort préalable de recul sur la bague externe, à l'encontre d'un ressort. Le verrouillage des éléments mâle et femelle n'est alors pas automatique.

Par ailleurs, US-A-5,253,716 décrit un élément femelle de raccord comprenant deux bagues superposées, parmi lesquelles une bague interne est soudée sur un corps de l'élément femelle, alors qu'une bague externe est mobile axialement par rapport à la bague interne. La bague interne comporte des fentes de réception de pions en saillie radiale d'un élément mâle apte à être emmanché dans l'élément femelle, chaque pion étant prévu pour être sécurisé dans une fente de la bague interne grâce à une rainure semi-circulaire correspondante de la bague externe. Dans ce dispositif, la connexion des éléments mâle et femelle nécessite un recul axial de la bague externe par rapport à la bague interne, ainsi qu'une rotation de l'élément mâle par rapport à l'élément femelle pour faire progresser les pions de l'élément mâle dans les fentes de la bague interne. Un tel dispositif ne permet pas un verrouillage automatique des éléments de raccord en un mouvement unique d'un opérateur.

C'est à ces inconvénients qu'entend plus particulièrement remédier l'invention en proposant un élément de raccord apte à recevoir en emmanchement un second élément, ces éléments étant aptes à être verrouillés de manière fiable l'un par rapport à l'autre, le verrouillage en position connectée étant automatique.

A cet effet, l'invention a pour objet un élément de raccord destiné à la jonction amovible de canalisations, cet élément étant apte à recevoir en emmanchement, selon son axe longitudinal, un second élément, le premier élément comprenant deux bagues coaxiales superposées, à savoir une bague de verrouillage et une bague de sécurité, montées autour d'un corps du premier élément, des moyens étant aptes à bloquer axialement la bague de verrouillage par rapport au corps alors que la bague de sécurité est apte à coulisser par rapport à la bague de verrouillage et au corps, la bague de verrouillage étant munie d'au moins une rainure de verrouillage destinée à recevoir une partie en saillie radiale d'un second élément emmanché dans le premier élément, une encoche de la rainure de verrouillage étant apte à verrouiller axialement la partie en saillie radiale par rapport au premier élément, la bague de sécurité étant munie d'au moins une rainure de sécurité destinée à recevoir la partie en saillie radiale lorsqu'elle est reçue dans la rainure de verrouillage, une encoche de la rainure de sécurité étant apte à verrouiller circonférentiellement la partie en saillie radiale par rapport à la bague de verrouillage dans l'encoche de la rainure de verrouillage, caractérisé en ce que les bagues de verrouillage et de sécurité sont montées avec possibilité de rotation autour du corps de l'élément, des moyens étant aptes à solidariser en rotation les deux bagues.

Selon d'autres caractéristiques avantageuses d'un élément de raccord conforme à l'invention :
- la bague de verrouillage est la bague interne, alors que la bague de sécurité est la bague externe ;
- l'encoche de la rainure de verrouillage est orientée sensiblement circonférentiellement par rapport à l'élément, alors que l'encoche de la rainure de sécurité est orientée sensiblement axialement par rapport à l'élément ;
- les moyens de solidarisation en rotation des bagues de verrouillage et de sécurité comprennent au moins un organe en saillie radiale par rapport à la surface externe de la bague interne et apte à être reçu dans une fente axiale de la bague externe ;
- les moyens de blocage axial de la bague de verrouillage par rapport au corps comprennent au moins un organe en saillie radiale par rapport à la surface interne de la bague de verrouillage et apte à être reçu dans une gorge périphérique externe du corps ;
- la rainure de verrouillage comporte une portion d'entrée orientée sensiblement axialement par rapport à l'élément ;
- l'élément comporte des moyens de rappel élastique tendant à positionner la bague de sécurité par rapport à la bague de verrouillage de telle sorte que l'encoche de la rainure de verrouillage et l'encoche de la rainure de sécurité sont sensiblement superposées ;
- la rainure de sécurité comporte une portion d'entrée dont un bord est incliné depuis l'encoche de la rainure de sécurité en direction de la portion d'entrée de la rainure de verrouillage, ce bord étant destiné à guider la partie en saillie radiale d'un second élément de raccord emmanché dans le premier élément hors de l'encoche de la rainure de verrouillage, lors de la déconnexion des éléments de raccord ;
- la rainure de sécurité comporte une portion d'entrée dont un deuxième bord est incliné depuis l'encoche de la rainure de sécurité en direction de la portion d'entrée de la rainure de verrouillage, ce deuxième bord étant destiné à guider la partie en saillie radiale d'un second élément de raccord vers l'encoche de la rainure de verrouillage, lors de la connexion des éléments de raccord.

L'invention a également pour objet un raccord pour la jonction amovible de canalisations, comprenant un premier et un second éléments propres à s'emmancher l'un dans l'autre selon un axe principal du raccord, le second élément comportant au moins une partie en saillie radiale alors que le premier élément est tel que décrit ci-dessus. De manière avantageuse, le second élément comporte au moins deux parties en saillie radiale, le premier élément comportant au moins deux rainures de verrouillage et au moins deux rainures de sécurité correspondantes.

Les caractéristiques et avantages de l'invention apparaîtront dans la description qui va suivre de deux modes de réalisation d'un élément de raccord et d'un raccord selon l'invention, donnée uniquement à titre d'exemple et faite en se référant aux dessins annexés dans lesquels :
- la figure 1 est une vue de côté d'un raccord conforme à un premier mode de réalisation de l'invention, avant accouplement de ses éléments mâle et femelle ;
- la figure 2 est une vue analogue à la figure 1 lors d'une première étape de l'accouplement des éléments mâle et femelle ;
- la figure 3 est une coupe axiale à plus grande échelle selon la ligne III-III de la figure 2 ;
- la figure 4 est une vue analogue à la figure 1 lors d'une deuxième étape de l'accouplement des éléments mâle et femelle ;
- la figure 5 est une coupe axiale selon la ligne V-V de la figure 4 ;
- la figure 6 est une vue analogue à la figure 1 lors d'une troisième étape de l'accouplement des éléments mâle et femelle ;
- la figure 7 est une vue analogue à la figure 1 en configuration verrouillée et passante du raccord ;
- la figure 8 est une vue analogue à la figure 1 lors d'une première étape du désaccouplement des éléments mâle et femelle ;
- la figure 9 est une coupe analogue à la figure 3 pour un raccord conforme à un deuxième mode de réalisation de l'invention, les clapets internes des éléments du raccord ayant été omis.

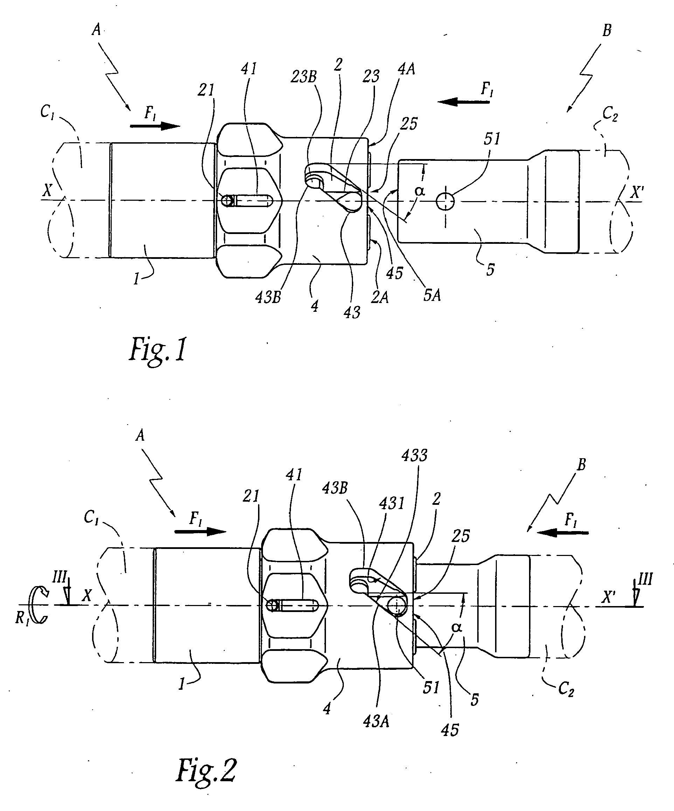

Le raccord conforme au premier mode de réalisation de l'invention, représenté sur les figures 1 à 8, comprend un élément femelle A et un élément mâle B, tous deux de forme globalement tubulaire et complémentaires l'un de l'autre. La partie arrière de l'élément femelle A est raccordée fluidiquement à une première canalisation C₁, alors que la partie arrière de l'élément mâle B est raccordée à une seconde canalisation C₂.

On note X-X' l'axe principal du raccord formé par les éléments A et B, c'est-à-dire l'axe longitudinal des éléments A et B dans les configurations des figures 1 à 8.

L'élément femelle A comprend un corps 1 globalement tubulaire et à section circulaire autour duquel sont montées deux bagues à section circulaire, coaxiales et superposées, à savoir une bague interne de verrouillage 2 et une bague externe de sécurité 4, centrées sur l'axe X-X' .

L'élément mâle B comprend un corps 5 globalement tubulaire et à section circulaire, qui comporte au voisinage de son extrémité avant 5A opposée à la canalisation C₂ une paire de pions 51 diamétralement opposés, qui font saillie radialement vers l'extérieur.

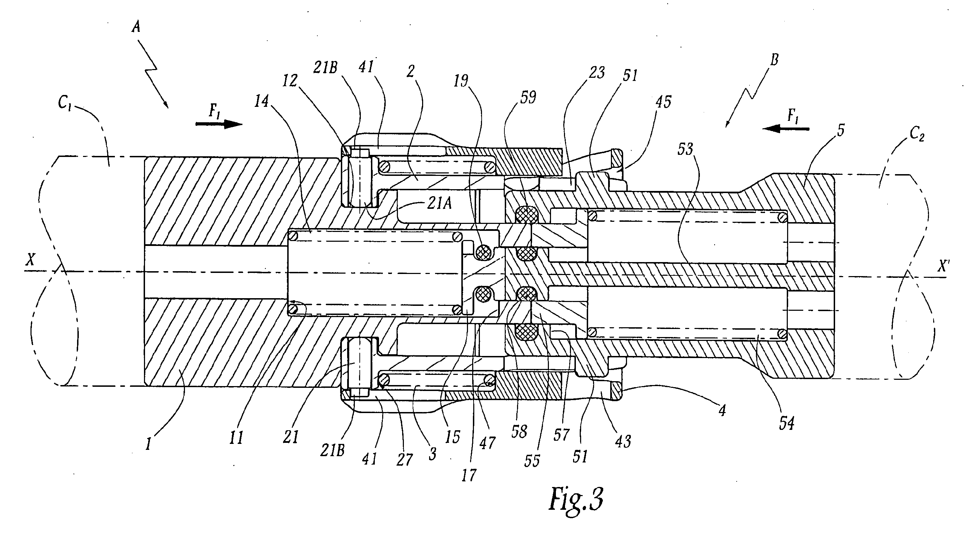

Comme montré à la figure 3, un poussoir 53 est prévu pour être monté fixe à l'intérieur du corps 5 en étant centré sur l'axe X-X'. Un clapet annulaire 55 est disposé autour du poussoir 53 et chargé élastiquement par un ressort 54 en direction d'un siège 57 formé à l'intérieur du corps 5. Deux joints 58 et 59 assurent respectivement l'étanchéité entre le clapet 55 et le poussoir 53 d'une part, et entre le clapet 55 et le corps 5 d'autre part.

Le corps 1 de l'élément femelle A définit un épaulement radial interne 11 permettant l'appui d'un ressort 14 qui exerce un effort élastique sur un clapet 15 de façon à le plaquer sur un siège 17 formé dans le corps 1. Un joint 19 monté sur le clapet 15 assure l'étanchéité entre ce clapet et le corps 1.

Les bagues de verrouillage 2 et de sécurité 4 de l'élément femelle A sont aptes à tourner par rapport à l'axe X-X' autour du corps 1. La bague interne 2 est pourvue de deux ergots 21 diamétralement opposés, qui font saillie radialement par rapport à la bague interne 2 à la fois vers l'intérieur et vers l'extérieur. Une extrémité intérieure 21A de chaque ergot 21 est destinée à être reçue dans une gorge 12 périphérique externe du corps 1. Ainsi, la bague interne de verrouillage 2 est bloquée axialement par rapport au corps 1.

Les ergots 21 sont aptes à coulisser par leurs extrémités extérieures 21B dans deux fentes 41 axiales diamétralement opposées, ménagées dans la bague externe de sécurité 4. Du fait de la coopération entré les ergots 21 et les fentes 41, les bagues interne de verrouillage 2 et externe de sécurité 4 sont solidaires en rotation autour du corps 1, la bague de sécurité 4 étant mobile en coulissement axial par rapport à la bague de verrouillage 2 et au corps 1.

La bague de verrouillage 2 comporte deux rainures de verrouillage 23 diamétralement opposées, destinées à recevoir les pions 51 de l'élément mâle B. Chaque rainure 23 est débouchante et s'étend à partir d'une ouverture 25 formée au niveau de l'extrémité avant 2A de la bague de verrouillage 2 opposée à la canalisation C₁. Chaque ouverture 25 est pourvue de deux chanfreins 251 latéraux d'entrée, prévus pour faciliter l'accouplement des éléments A et B en guidant les pions 51. Chaque rainure 23 comporte une portion d'entrée 23A sensiblement axiale et une encoche 23B sensiblement circonférentielle, c'est-à-dire orientée selon une direction correspondant à une rotation autour de l'axe X-X', qui constitue l'extrémité de la rainure de verrouillage 23 opposée à l'ouverture 25. La portion d'entrée 23A est délimitée par des parois 231 et 233, sensiblement parallèles à l'axe X-X'.

La bague de sécurité 4 comporte deux rainures de sécurité 43 diamétralement opposées, destinées à recevoir les pions 51 de l'élément mâle B lorsqu'ils sont reçus dans les rainures de verrouillage 23 de la bague de verrouillage 2. A cet effet, les pions 51 sont conçus avec une hauteur telle qu'ils peuvent être en prise à la fois avec la bague interne de verrouillage 2 au niveau des rainures de verrouillage 23 et en partie avec l'épaisseur de la bague externe de sécurité 4 au niveau des rainures de sécurité 43. Le fait que les pions 51 ne traversent pas toute l'épaisseur de la bague de sécurité 4 permet d'améliorer la tenue mécanique de cette bague. En effet, il est possible de prévoir de la matière dans l'épaisseur la plus extérieure de chaque rainure 43. Dans le mode de réalisation décrit, chaque rainure 43 est débouchante sauf au niveau de l'extrémité avant 4A de la bague 4 opposée à la canalisation C₁, où l'entrée dans la rainure 43 est définie par une partie d'extrémité 45 non débouchante interne de la bague 4. En variante, chaque rainure 43 peut être non débouchante sur toute sa longueur.

Chaque rainure de sécurité 43 comporte une portion d'entrée 43A et une encoche 43B sensiblement axiale, qui constitue l'extrémité de la rainure 43 opposée à la partie d'extrémité 45. La portion d'entrée 43A est inclinée d'un angle α obtus par rapport à l'encoche 43B et est délimitée par des parois parallèles 431 et 433.

Un ressort 3 de compression est disposé entre un épaulement radial externe 27 de la bague interne de verrouillage 2 et un épaulement radial interne 47 de la bague externe de sécurité 4. Le ressort 3 exerce un effort élastique sur la bague de sécurité 4 et la pousse à l'opposé de la canalisation C₁. L'effort élastique dû au ressort 3 positionne la bague de sécurité 4 de telle sorte que chaque encoche 23B d'une rainure de verrouillage est sensiblement superposée avec une encoche 43B d'une rainure de sécurité, alors que chaque ouverture 25 d'une rainure de verrouillage est sensiblement superposée avec une partie d'extrémité 45 d'une rainure de sécurité. Ainsi, grâce au ressort 3, il n'existe pas de position relative stable des bagues 2 et 4 qui ne permette pas l'emmanchement de l'élément mâle B dans l'élément femelle A.

Lorsqu'il convient d'emmancher l'élément mâle B dans l'élément femelle A, ceux-ci sont rapprochés l'un de l'autre comme représenté par les flèches F₁ aux figures 1 à 5. Chaque pion 51 de l'élément mâle B est introduit simultanément dans l'ouverture 25 d'une rainure de verrouillage 23 de la bague de verrouillage 2 et dans une partie d'extrémité 45 d'une rainure de sécurité 43 de la bague de sécurité 4. Sous l'effet des efforts axiaux F₁, chaque pion 51 progresse axialement dans la portion d'entrée 23A de la rainure 23 jusqu'à venir en butée élastique contre le bord 433 incliné de la portion d'entrée 43A de la rainure 43. Cette butée élastique inclinée provoque une légère rotation de la bague de sécurité 4, et donc de la bague de verrouillage 2, dans le sens de la flèche R₁ de la figure 2, qui permet de rattraper le jeu existant entre le pion 51 et le bord 231 de la portion 23A de la rainure 23.

Sous l'action des efforts F₁ maintenus sur les éléments A et B, le pion 51 poursuit sa progression dans la portion 23A en appui contre le bord 231, la bague de sécurité 4 étant déplacée axialement par rapport à la bague de verrouillage 2 à l'encontre de l'effort élastique du ressort 3, du fait de la butée du pion 51 contre le bord 433 de la portion 43A au voisinage de la partie d'extrémité 45.

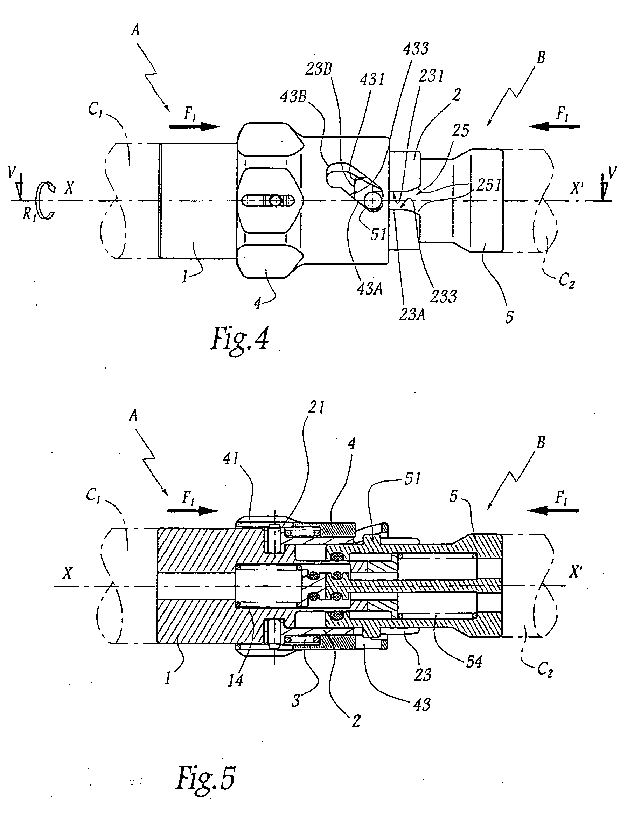

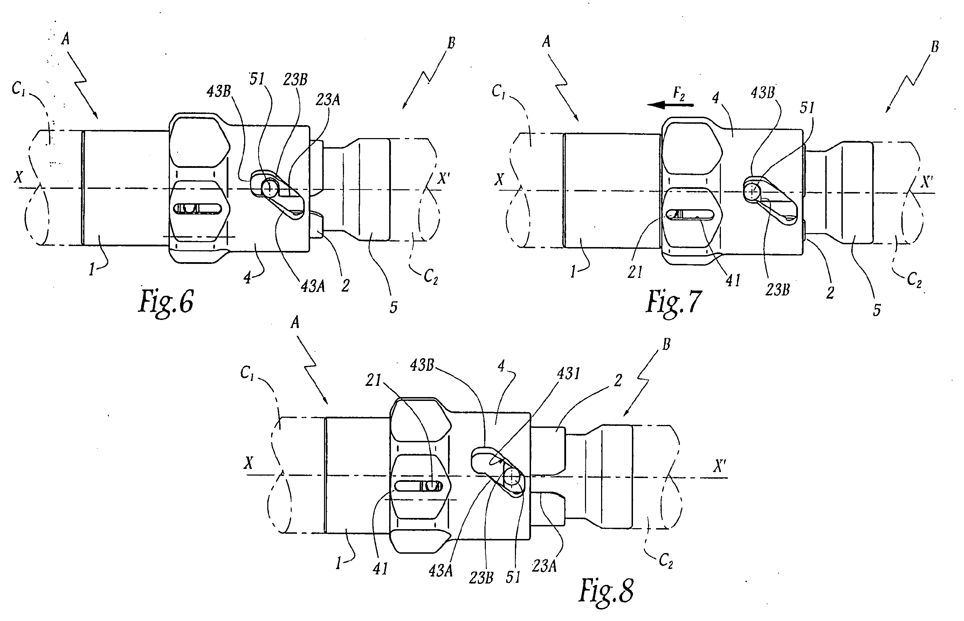

Lorsque le pion 51 arrive, dans la portion d'entrée 23A, en regard de l'encoche 23B de la rainure de verrouillage 23, les bagues de verrouillage 2 et de sécurité 4 sont aptes à tourner par rapport à l'axe X-X' autour du corps 1. Cette rotation a lieu grâce aux efforts axiaux F₁ maintenus sur les éléments A et B. En raison de l'inclinaison de la paroi 433 de la rainure 43 par rapport à l'axe X-X' du raccord, la butée du pion 51 contre la paroi 433 provoque un déplacement latéral de la bague de sécurité 4, et donc de la bague de verrouillage 2, qui les entraîne en rotation autour du corps 1 dans le sens de la flèche R₁ de la figure 4. Ainsi, l'encoche 23B de la rainure de verrouillage 23 vient entourer partiellement le pion 51 et verrouille sa position axialement, comme visible à la figure 6.

A l'issue de la rotation des bagues de verrouillage 2 et de sécurité 4, chaque pion 51 se trouve, dans la portion d'entrée 43A, en regard de l'encoche 43B de la rainure de sécurité 43. L'encoche 43B étant sensiblement axiale, la bague de sécurité 4 est alors apte à coulisser par rapport à la bague de verrouillage 2 et au corps 1 sous l'action élastique du ressort 3. L'encoche 43B de la rainure de sécurité 43 vient ainsi entourer partiellement le pion 51 et verrouille sa position circonférentiellement, c'est-à-dire en rotation autour de l'axe X-X', par rapport à l'encoche 23B, comme visible à la figure 7. A l'issue de l'accouplement des éléments mâle B et femelle A, chaque pion 51 est donc en position verrouillée dans les deux encoches 23B et 43B, la bague de verrouillage 2 faisant obstacle à tout mouvement axial du pion 51 ainsi qu'à un mouvement latéral du pion 51 grâce au fond de l'encoche 23B, alors que la bague de sécurité 4 fait obstacle au mouvement latéral restant du pion 51 hors de l'encoche 23B.

Telle que décrite ci-dessus, la commande du verrouillage des pions 51 dans les rainures de verrouillage 23 et de sécurité 43 est essentiellement axiale et automatique. En configuration d'accouplement des éléments mâle B et femelle A, ces éléments sont aptes à pivoter l'un par rapport à l'autre. Ainsi, l'accouplement n'ajoute pas de contrainte en cas de torsion des canalisations.

Le désaccouplement des éléments mâle B et femelle A du raccord conforme à ce premier mode de réalisation de l'invention est réalisé en exerçant sur la bague externe de sécurité 4 un effort axial dirigé vers la canalisation C₁, à l'encontre du ressort 3, comme représenté par la flèche F₂ de la figure 7. Le bord 431 incliné de la portion d'entrée 43A de la rainure 43 vient alors en butée contre le pion 51. Le bord incliné 431 exerce une composante circonférentielle d'effort sur le pion 51, qui guide le pion 51 hors de l'encoche 23B de la rainure de verrouillage 23 jusqu'à la portion d'entrée 23A. Lorsque le pion 51 est dans la portion d'entrée 23A de la rainure de verrouillage 23, la bague de sécurité 4, relâchée par l'opérateur, est apte à être déplacée à l'opposé de la canalisation C₁ sous l'action du ressort 3. Sous l'action élastique de la bague de sécurité 4 et des clapets 15 et 55, le pion 51 est repoussé en direction de l'ouverture 25, jusqu'à être éjecté hors de la bague de verrouillage 2. Les éléments mâle B et femelle A du raccord sont alors désolidarisés. De manière facultative, un effort complémentaire peut être exercé par un opérateur pour désolidariser les éléments A et B.

De manière particulièrement avantageuse, le bord 431 de la portion d'entrée 43A de la rainure de sécurité 43 est incliné en direction de la portion d'entrée 23A de la rainure de verrouillage 23 et débouche dans la portion d'entrée 23A, quelle que soit la position axiale relative des bagues 2 et 4. Ainsi, lors du désaccouplement des éléments A et B, le bord 431 guide le déplacement circonférentiel du pion 51 hors de l'encoche 23B et garantit que le pion 51 peut atteindre effectivement la portion d'entrée 23A préalablement au relâchement de la bague de sécurité 4 par l'opérateur. Comme le bord 431 guide le pion 51 hors de l'encoche 23B, la déconnexion ne nécessite aucune autre intervention de la part de l'opérateur pour déplacer circonférentiellement le pion 51.

La déconnexion des éléments mâle B et femelle A du raccord de l'invention est donc une déconnexion à mouvement unique, ce mouvement unique correspondant au déplacement axial de la bague de sécurité 4 en direction de la canalisation C₁. Si le verrouillage de l'élément mâle B dans l'élément femelle A n'est pas complet, c'est-à-dire si le pion 51 n'est pas enclenché dans l'encoche 23B de la rainure de verrouillage 23, la bague de sécurité 4 et les clapets 15 et 55 chargés élastiquement poussent le pion 51 hors de la rainure de verrouillage 23 et désolidarisent les éléments mâle et femelle. Ainsi, toute position intermédiaire entre l'état déverrouillé et l'état verrouillé, ou entre l'état verrouillé et l'état déverrouillé, est impossible.

Grâce au double verrouillage axial et circonférentiel des pions 51 dans les encoches 23B et 43B, tout risque de déverrouillage en position connectée des éléments mâle et femelle est supprimé.

Lors de la connexion ou de la déconnexion des éléments mâle B et femelle A du raccord de l'invention, les efforts les plus importants, qui correspondent aux configurations dans lesquelles les deux éléments sont les plus proches l'un de l'autre, sont fournis par un opérateur et non par le ressort de compression 3. Ceci garantit la fiabilité du verrouillage et du déverrouillage des pions 51 par rapport aux rainures 23 et 43. De plus, du fait de l'inclinaison des bords 431 et 433 des rainures de sécurité 43, les efforts fournis par l'opérateur sont à bon rendement, ce qui facilite l'ergonomie.

Dans le mode de réalisation décrit, les bords inclinés 431 et 433 des rainures 43 sont parallèles entre eux. Selon une variante non représentée de l'invention, les bords 431 et 433 peuvent être non parallèles, l'inclinaison de chacun étant adaptée pour une ergonomie optimale à la connexion et à la déconnexion des éléments A et B.

Grâce à la combinaison des rainures de verrouillage 23 et des rainures de sécurité 43, la surcourse axiale du raccord de l'invention correspond au jeu de fonctionnement. Elle est donc minimale. Ainsi, l'encombrement axial des pièces constitutives des éléments mâle B et femelle A du raccord peut être réduit, ainsi que la course et l'encombrement des pièces internes, tels que les clapets de sécurité. La surcourse en rotation du raccord de l'invention est également réduite, ce qui permet de diminuer la fragilisation des pièces due à la création des rainures.

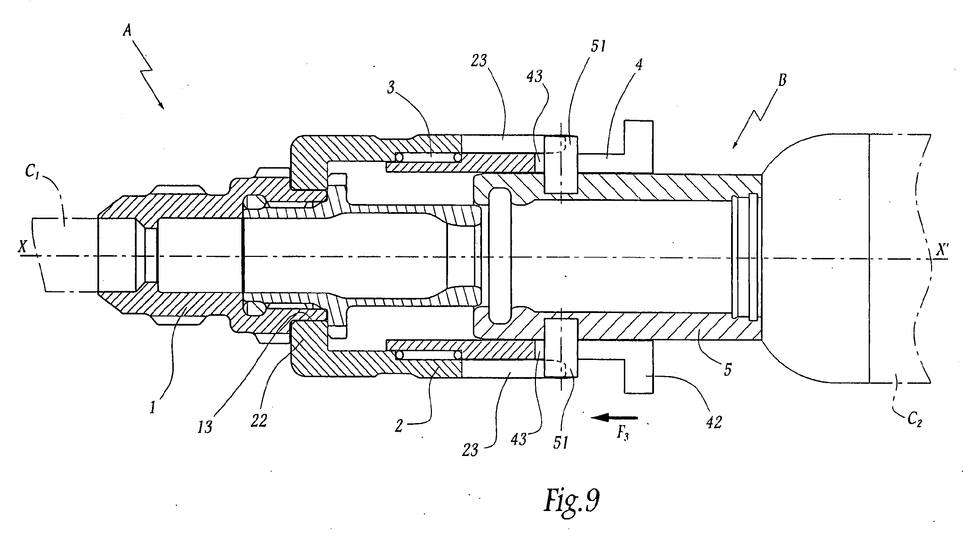

Dans le deuxième mode de réalisation de l'invention représenté à la figure 9, l'élément femelle A comprend, comme dans le premier mode de réalisation, une bague de verrouillage 2 et une bague de sécurité 4 coaxiales, montées autour du corps 1. Cependant, à la différence du premier mode de réalisation, la bague de verrouillage 2 est ici la bague externe, alors que la bague de sécurité 4 est la bague interne. La bague externe de verrouillage 2 comporte une collerette 22 périphérique interne destinée à être reçue dans une gorge 13 périphérique externe du corps 1. Ainsi, la bague externe de verrouillage 2 est bloquée axialement par rapport au corps 1. Les bagues de verrouillage 2 et de sécurité 4 comportent respectivement, de manière analogue au premier mode de réalisation, deux rainures de verrouillage 23 et deux rainures de sécurité 43 aptes à recevoir les pions 51 diamétralement opposés de l'élément mâle B. Telles que représentées à la figure 9, les rainures 23 et 43 sont débouchantes. En variante, les rainures de verrouillage 23 peuvent être non débouchantes.

Les bagues de verrouillage 2 et de sécurité 4 sont reliées par deux goupilles non représentées, disposées sensiblement perpendiculairement par rapport à des fentes axiales non représentées, analogues aux fentes 41 du premier mode de réalisation, ménagées dans les bagues de verrouillage 2 et de sécurité 4. Les bagues 2 et 4 sont ainsi solidaires en rotation autour du corps 1, la bague de sécurité 4 étant apte à coulisser par rapport à la bague de verrouillage 2, entre le corps 1 et la bague de verrouillage 2. Un ressort 3 de compression, logé entre la bague interne de sécurité 4 et la bague externe de verrouillage 2, exerce un effort élastique sur la bague de sécurité 4 à l'opposé de la canalisation C₁ de façon à superposer sensiblement les encoches des rainures 23 et 43 d'une part, et leurs ouvertures et parties d'extrémité d'autre part.

L'accouplement des éléments mâle B et femelle A du raccord conforme à ce deuxième mode de réalisation est automatique, de manière analogue au premier mode de réalisation. Le désaccouplement de ces éléments est réalisé en exerçant sur la bague interne de sécurité 4 un effort axial dirigé vers la canalisation C₁, à l'encontre du ressort 3, comme représenté par la flèche F₃ de la figure 9. La bague interne 4 est accessible grâce à une collerette 42 périphérique externe, fendue pour permettre le passage des pions 51 et conçue pour être en saillie axiale par rapport à la bague externe 2, à l'opposé de la canalisation C₁. Comme dans le premier mode de réalisation, la déconnexion des éléments A et B est une déconnexion à mouvement unique.

L'invention n'est pas limitée aux exemples décrits et représentés. Selon une variante non représentée de l'invention, les pions 51 peuvent être ménagés dans un élément femelle, ces pions étant en saillie radiale vers l'intérieur de l'élément femelle tubulaire. Un élément mâle complémentaire comprend une bague de verrouillage et une bague de sécurité, analogues aux bagues 2 et 4, montées autour d'un corps de l'élément mâle. Dans ce cas, chaque rainure de la bague externe doit être débouchante, y compris au niveau de l'extrémité avant de cette bague, pour permettre le passage du pion correspondant. Les rainures de la bague interne n'ont pas besoin d'être débouchantes.

Selon une autre variante non représentée de l'invention, le nombre de pions 51 peut être supérieur à deux, les pions étant avantageusement régulièrement répartis sur la surface de l'élément qu'ils équipent. Il peut également être avantageux, lorsque l'on a plusieurs pions 51, de faire en sorte que ces pions ne soient pas régulièrement répartis, de même que les rainures de verrouillage 23 et de sécurité 43 correspondantes. Le raccord obtenu présente ainsi des moyens de détrompage, qui participent à la sécurisation du raccord.

En outre, chaque pion 51 peut ne pas être monobloc avec le corps 5, mais rapporté sur ce corps et immobilisé par tout moyen adéquat. Chaque pion 51 peut également être prévu avec un méplat de façon à répartir les efforts de contact, résultant de l'action des ressorts des clapets, dans l'encoche 23B de la rainure de verrouillage correspondante. En variante, cette encoche 23B peut être prévue avec un aménagement en arc de cercle profond de quelques dixièmes de millimètres afin de prévenir le matage des surfaces de contact qui se produit entre un pion 51 cylindrique et une encoche 23B à parois planes.

Enfin, dans le mode de réalisation décrit, les jeux existant entre chaque pion 51 et l'encoche 23B de la rainure de verrouillage correspondante ne sont pas rattrapés. En variante, un rattrapage de ces jeux par la bague de sécurité 4 peut être réalisé dans le sens axial et latéral au moyen d'un ressort dimensionné en conséquence. Le verrouillage circonférentiel, ou latéral, de chaque pion 51 en position connectée des éléments mâle et femelle peut également être assuré exclusivement par la bague de sécurité 4, moyennant une configuration adaptée de cette bague. Dans ce cas, la bague de verrouillage 2 assure uniquement le verrouillage axial de chaque pion 51.

## Revendications

1. Elément (A) de raccord destiné à la jonction amovible de canalisations (C₁, C₂), ledit élément (A) étant apte à recevoir en emmanchement, selon un axe longitudinal (X-X') dudit élément (A), un second élément (B), le premier élément (A) comprenant deux bagues coaxiales superposées, à savoir une bague de verrouillage (2) et une bague de sécurité (4), montées autour d'un corps (1) du premier élément, des moyens (12, 21) étant aptes à bloquer axialement la bague de verrouillage (2) par rapport au corps (1) alors que la bague de sécurité (4) est apte à coulisser par rapport à la bague de verrouillage (2) et au corps (1), la bague de verrouillage (2) étant munie d'au moins une rainure de verrouillage (23) destinée à recevoir une partie (51) en saillie radiale d'un second élément (B) emmanché dans le premier élément (A), une encoche (23B) de la rainure de verrouillage étant apte à verrouiller axialement ladite partie (51) par rapport au premier élément, la bague de sécurité (4) étant munie d'au moins une rainure de sécurité (43) destinée à recevoir ladite partie (51) lorsqu'elle est reçue dans la rainure de verrouillage (23), une encoche (43B) de la rainure de sécurité étant apte à verrouiller circonférentiellement ladite partie (51) par rapport à la bague de verrouillage (2) dans l'encoche (23B) de la rainure de verrouillage (23), **caractérisé en ce que** les bagues de verrouillage (2) et de sécurité (4) sont montées avec possibilité de rotation autour du corps (1) dudit élément (A), des moyens (21, 41) étant aptes à solidariser en rotation les deux bagues.

2. Elément (A) de raccord selon la revendication 1, **caractérisé en ce que** la bague de verrouillage (2) est la bague interne, alors que la bague de sécurité (4) est la bague externe.

3. Elément (A) de raccord selon l'une quelconque des revendications précédentes, **caractérisé en ce que** l'encoche (23B) de la rainure de verrouillage (23) est orientée sensiblement circonférentiellement par rapport audit élément (A), alors que l'encoche (43B) de la rainure de sécurité (43) est orientée sensiblement axialement par rapport audit élément.

4. Elément (A) de raccord selon l'une quelconque des revendications précédentes, **caractérisé en ce que** lesdits moyens de solidarisation en rotation des bagues de verrouillage (2) et de sécurité (4) comprennent au moins un organe (21) en saillie radiale par rapport à la surface externe de la bague interne et apte à être reçu dans une fente (41) axiale de la bague externe.

5. Elément (A) de raccord selon l'une quelconque des revendications précédentes, **caractérisé en ce que** lesdits moyens de blocage axial de la bague de verrouillage (2) par rapport au corps (1) comprennent au moins un organe (21, 22) en saillie radiale par rapport à la surface interne de la bague de verrouillage (2) et apte à être reçu dans une gorge (12, 13) périphérique externe du corps (1).

6. Elément (A) de raccord selon l'une quelconque des revendications précédentes, **caractérisé en ce que** la rainure de verrouillage (23) comporte une portion d'entrée (23A) orientée sensiblement axialement par rapport audit élément (A).

7. Elément (A) de raccord selon l'une quelconque des revendications précédentes, **caractérisé en ce qu'**il comporte des moyens (3) de rappel élastique tendant à positionner la bague de sécurité (4) par rapport à la bague de verrouillage (2) de telle sorte que l'encoche (23B) de la rainure de verrouillage (23) et l'encoche (43B) de la rainure de sécurité (43) sont sensiblement superposées.

8. Elément (A) de raccord selon la revendication 7, **caractérisé en ce que** la rainure de sécurité (43) comporte une portion d'entrée (43A) dont un bord (431) est incliné depuis l'encoche (43B) de la rainure de sécurité en direction de la portion d'entrée (23A) de la rainure de verrouillage (23), ledit bord (431) étant destiné à guider ladite partie (51) d'un second élément (B) de raccord emmanché dans l'élément (A) hors de l'encoche (23B) de la rainure de verrouillage, lors de la déconnexion des éléments (A, B) de raccord.

9. Elément (A) de raccord selon la revendication 7, **caractérisé en ce que** la rainure de sécurité (43) comporte une portion d'entrée (43A) dont un deuxième bord (433) est incliné depuis l'encoche (43B) de la rainure de sécurité en direction de la portion d'entrée (23A) de la rainure de verrouillage (23), ledit deuxième bord (433) étant destiné à guider ladite partie (51) d'un second élément (B) de raccord vers l'encoche (23B) de la rainure de verrouillage, lors de la connexion des éléments (A, B) de raccord.

10. Raccord pour la jonction amovible de canalisations (C₁, C₂), comprenant un premier (A) et un second (B) éléments propres à s'emmancher l'un dans l'autre selon un axe principal (X-X') du raccord, le second élément (B) comportant au moins une partie (51) en saillie radiale, **caractérisé en ce que** le premier élément (A) est selon l'une quelconque des revendications précédentes.

11. Raccord selon la revendication 10, **caractérisé en ce que** le second élément (B) comporte au moins deux parties (51) en saillie radiale, le premier élément (A) comportant au moins deux rainures de verrouillage (23) et au moins deux rainures de sécurité (43) correspondantes.

## Claims

1. Coupling element (A) intended for removably joining pipes (C₁, C₂), the said element (A) being able to have, pushed into it along a longitudinal axis (X-X') of the said element (A), a second element (B), the first element (A) comprising two superposed coaxial rings, namely a locking ring (2) and a safety ring (4) which are mounted around a body (1) of the first element, means (12, 21) being able to block the locking ring (2) axially with respect to the body (1) while the safety ring (4) is able to slide with respect to the locking ring (2) and with respect to the body (1), the locking ring (2) being equipped with at least one locking slot (23) intended to accept a radially projecting part (51) of a second element (B) pushed into the first element (A), a notch (23B) of the locking slot being able to lock the said part (51) axially with respect to the first element, the safety ring (4) being equipped with at least one safety slot (43) intended to accept the said part (51) when it is accepted in the locking slot (23), a notch (43B) of the safety slot being able to lock the said part (51) circumferentially with respect to the locking ring (2) in the notch (23B) of the locking slot (23), **characterised in that** the locking ring (2) and the safety ring (4) are mounted with the possibility of rotating about the body (1) of the said element (A), means (21, 41) being able to cause the two rings to rotate as one.

2. Coupling element (A) according to Claim 1, **characterised in that** the locking ring (2) is the inner ring while the safety ring (4) is the outer ring.

3. Coupling element (A) according to either one of the preceding claims, **characterised in that** the notch (23B) of the locking slot (23) is directed substantially circumferentially with respect to the said element (A) while the notch (43B) of the safety slot (43) is directed substantially axially with respect to the said element.

4. Coupling element (A) according to any one of the preceding claims, **characterised in that** the said means for causing the locking ring (2) and the safety ring (4) to rotate as one comprise at least one member (21) projecting radially from the outer surface of the inner ring and able to be accepted in an axial slit (41) of the outer ring.

5. Coupling element (A) according to any one of the preceding claims, **characterised in that** the said means for axially blocking the locking ring (2) with respect to the body (1) comprise at least one member (21, 22) projecting radially from the inner surface of the locking ring (2) and able to be accepted in an outer peripheral groove (12, 13) of the body (1).

6. Coupling element (A) according to any one of the preceding claims, **characterised in that** the locking slot (23) comprises an entry portion (23A) directed substantially axially with respect to the said element (A).

7. Coupling element (A) according to any one of the preceding claims, **characterised in that** it comprises elastic return means (3) which tend to position the safety ring (4) with respect to the locking ring (2) in such a way that the notch (23B) of the locking slot (23) and the notch (43B) of the safety slot (43) are substantially superposed.

8. Coupling element (A) according to Claim 7, **characterised in that** the safety slot (43) comprises an entry portion (43A), one edge (431) of which is inclined from the notch (43B) of the safety slot towards the entry portion (23A) of the locking slot (23), the said edge (431) being intended to guide the said part (51) of a second coupling element (B) pushed into the element (A) out of the notch (23B) of the locking slot when the coupling elements (A, B) are being disconnected.

9. Coupling element (A) according to Claim 7, **characterised in that** the safety slot (43) comprises an entry portion (43A), a second edge (433) of which is inclined from the notch (43B) of the safety slot towards the entry portion (23A) of the locking slot (23), the said second edge (433) being intended to guide the said part (51) of a second coupling element (B) towards the notch (23B) of the locking slot when the coupling elements (A, B) are being connected.

10. Coupling for removably joining pipes (C₁, C₂), comprising a first element (A) and a second element (B) which are able to be pushed one into the other along a main axis (X-X') of the coupling, the second element (B) comprising at least one radially projecting part (51), **characterised in that** the first element (A) is an element according to any one of the preceding claims.

11. Coupling according to Claim 10, **characterised in that** the second element (B) comprises at least two radially projecting parts (51), the first element (A) comprising at least two corresponding locking slots (23) and at least two corresponding safety slots (43).

## Patentansprüche

1. Verbindungselement (A) zur lösbaren Verbindung von Leitungen (C₁, C₂), wobei das Element (A) geeignet ist, entsprechend einer Längsachse (X-X') des Elements (A) ein zweites Element (B) in Einsteckung aufzunehmen, wobei das erste Element (A) zwei übereinander liegende koaxiale Ringe umfasst, nämlich einen Verriegelungsring (2) und einen Sicherungsring (4), die um einen Körper (1) des ersten Elements herum angeordnet sind, wobei Mittel (12, 21) geeignet sind, axial den Verriegelungsring (2) in Bezug auf den Körper (1) zu blockieren, während der Sicherungsring (4) geeignet ist, in Bezug auf den Verriegelungsring (2) und den Körper (1) zu gleiten, wobei der Verriegelungsring (2) mit mindestens einer Verriegelungsnut (23) ausgerüstet ist, die vorgesehen ist, einen hervorspringenden radialen Bereich (51) eines zweiten Elements (B) aufzunehmen, das in das erste Element (A) eingesteckt ist, wobei eine Ausnehmung (23B) der Verriegelungsnut geeignet ist, axial den Bereich (51) in Bezug auf das erste Element zu verriegeln und der Sicherungsring (4) mit mindestens einer Sicherungsnut (43) ausgerüstet ist, die vorgesehen ist, den Bereich (51) aufzunehmen, wenn er in der Verriegelungsnut (23) aufgenommen ist, und wobei eine Ausnehmung (43B) der Sicherungsnut geeignet ist, umfänglich den Bereich (51) in Bezug auf den Verriegelungsring (2) in der Ausnehmung (23B) der Verriegelungsnut (23) zu verriegeln, **dadurch gekennzeichnet, dass** die Ringe (2, 4) der Verriegelung und Sicherung mit der Möglichkeit der Drehung um den Körper (1) des Elements (A) herum befestigt sind und Mittel (21, 41) geeignet sind, die zwei Ringe bezüglich der Drehung festzulegen.

2. Verbindungselement (A) nach Anspruch 1, **dadurch gekennzeichnet, dass** der Verriegelungsring (2) der innere Ring ist, während der Sicherungsring (4) der äußere Ring ist.

3. Verbindungselement (A) nach einem beliebigen der vorhergehenden Ansprüche, **dadurch gekennzeichnet, dass** die Ausnehmung (23B) der Verriegelungsnut (23) im Wesentlichen umfänglich in Bezug auf das Element (A) ausgerichtet ist, während die Ausnehmung (43B) der Sicherungsnut (43) im Wesentlichen axial in Bezug auf das Element ausgerichtet ist.

4. Verbindungselement (A) nach einem beliebigen der vorhergehenden Ansprüche, **dadurch gekennzeichnet, dass** die Festlegungsmittel bezüglich der Drehung der Ringe(2, 4) zur Verriegelung und Sicherung mindestens ein radial in Bezug auf die Außenfläche des Innenringes vorspringendes Organ (21) umfassen, das geeignet ist, in einem axialen Spalt (41) des Außenrings aufgenommen zu werden.

5. Verbindungselement (A) nach einem beliebigen der vorhergehenden Ansprüche, **dadurch gekennzeichnet, dass** die Mittel zur axialen Blockierung des Verriegelungsrings (2) in Bezug auf den Körper (1) mindestens ein radial in Bezug auf die Innenfläche des Verriegelungsrings (2) vorspringendes Organ (21, 22) umfassen, das geeignet ist in einer äußeren Umfangsrille (12, 13) des Körpers (1) aufgenommen zu werden.

6. Verbindungselement (A) nach einem beliebigen der vorhergehenden Ansprüche, **dadurch gekennzeichnet, dass** die Verriegelungsnut (23) einen Eingangsbereich (23A) umfasst, der im Wesentlichen axial in Bezug auf das Element (A) ausgerichtet ist.

7. Verbindungselement (A) nach einem beliebigen der vorhergehenden Ansprüche, **dadurch gekennzeichnet, dass** es Mittel (3) zur elastischen Rückstellung umfasst, die dazu neigen, den Sicherungsring (4) in Bezug auf den Verriegelungsring (2) derart zu positionieren, dass die Ausnehmung (23B) der Verriegelungsnut (23) und die Ausrichtung (43B) der Sicherungsnut (43) im Wesentlichen übereinander angeordnet sind.

8. Verbindungselement (A) nach Anspruch 7, **dadurch gekennzeichnet, dass** die Sicherungsnut (43) einen Eingangsbereich (43A) umfasst, dessen Rand (431) von der Ausnehmung (43B) der Sicherungsnut in Richtung des Eingangsbereichs (23A) der Verriegelungsnut (23) geneigt ist, wobei der Rand (431) vorgesehen ist, den Bereich (51) eines zweiten Verbindungselements (B), das in das Element (A) eingesteckt ist, bei der Entkopplung der Verbindungselemente (A, B) aus der Ausnehmung (23B) der Verriegelungsnut heraus zu führen.

9. Verbindungselement (A) nach Anspruch 7, **dadurch gekennzeichnet, dass** die Sicherungsnut (43) einen Eintrittsbereich (43A) umfasst, von dem ein zweiter Rand (433) von der Ausnehmung (43B) der Sicherungsnut in Richtung des Eintrittsbereichs (23A) der Verriegelungsnut (23) geneigt ist, wobei der zweite Rand (433) vorgesehen ist, bei der Verkupplung der Verbindungselemente (A, B) den Bereich (51) eines zweiten Verbindungselements (B) zur Ausnehmung (23B) der Verriegelungsnut zu führen.

10. Verbindungsanordnung zur lösbaren Verbindung von Leitungen (C₁, C₂), ein erstes (A) und ein zweites (B) Element umfassen, die geeignet sind, gemäß einer Hauptachse (X-X') der Verbindungsanordnung ineinander gesteckt zu werden, wobei das zweite Element (B) mindestens einen radial hervorspringenden Bereich (51) aufweist, **dadurch gekennzeichnet, dass** das erste Element (A) nach einem beliebigen der vorhergehenden Ansprüche ausgebildet ist.

11. Verbindungsanordnung nach Anspruch 10, **dadurch gekennzeichnet, dass** das zweite Element (B) mindestens zwei radial hervorspringende Bereiche (51) aufweist, wobei das erste Element (A) mindestens zwei Verriegelungsnuten (23) und mindestens zwei entsprechende Sicherungsnuten (43) aufweist.
